(19) Europäisches Patentamt
European Patent Office
Office européen des brevets

(11) EP 0 509 415 B1

(12) **EUROPÄISCHE PATENTSCHRIFT**

(45) Veröffentlichungstag und Bekanntmachung des Hinweises auf die Patenterteilung: **22.05.1996 Patentblatt 1996/21**

(51) Int. Cl.$^6$: **B01D 71/68**

(21) Anmeldenummer: **92106253.5**

(22) Anmeldetag: **10.04.1992**

# (54) Synthetische hydrophile Membranen und Verfahren zu deren Herstellung

Synthetic hydrophil membranes and process for their preparation

Membranes synthétiques hydrophiliques et procédé de leur production

(84) Benannte Vertragsstaaten:
**AT BE CH DE DK ES FR GB GR IT LI LU MC NL PT SE**

(30) Priorität: **17.04.1991 DE 4112508**

(43) Veröffentlichungstag der Anmeldung: **21.10.1992 Patentblatt 1992/43**

(73) Patentinhaber: **Akzo Nobel N.V.**
**NL-6824 BM Arnhem (NL)**

(72) Erfinder:
- **Passlack, Jürgen, Dr.**
  **W-8751 Sulzbach (DE)**
- **Sluma, Heinz-Dieter, Dr.**
  **W-8754 Grossostheim (DE)**
- **Büttner, Brigitte**
  **W-8751 Grünmorsbach (DE)**
- **Scherf, Marion**
  **W-8751 Kleinwallstadt (DE)**

(74) Vertreter: **Fett, Günter et al**
**Akzo Patente GmbH,**
**Postfach 10 01 49**
**D-42097 Wuppertal (DE)**

(56) Entgegenhaltungen:
**EP-A- 0 337 626** **EP-A- 0 361 085**
**US-A- 3 855 122** **US-A- 4 207 182**

- **DERWENT ACCESSION NO. 87-103 990, Questel Tele- systems (WPIL) DERWENT PUBLICATIONS LTD., London**
- **DERWENT ACCESSION NO. 86-334 900, Questel Tele- systems (WPIL) DERWENT PUBLICATIONS LTD., London**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 509 415 B1

## Beschreibung

Die Erfindung betrifft hydrophile Membranen in Form von Hohlfäden oder Flachmembranen zur Dialyse und/oder Ultrafiltration, enthaltend ein Gemisch von Polysulfon und sulfoniertem Polysulfon.

Synthetische Membranen und darauf basierende Trennprozesse sind seit langem bekannt. Neben klassischen Anwendungsgebieten, wie z.B. der Meerwasserentsalzung mittels Umkehrosmose oder der Ultrafiltration von Prozeßwässern aus der Elektrotauchlackierung zur Rückgewinnung des Lackes, gewinnen Membranprozesse in den Bereichen Lebensmitteltechnologie, Medizin und Pharmazie zunehmend an Bedeutung. In den letztgenannten Fällen besitzen Membrantrennprozesse den großen Vorteil, daß die zu trennenden Stoffe thermisch nicht belastet oder gar geschädigt werden.

Eine wesentliche Voraussetzung für die Einsetzbarkeit von Membranen in diesen Bereichen ist oftmals die Sterilisierbarkeit der Membran. Nicht zuletzt aus sicherheitstechnischen und ökologischen Gründen ist dabei der Dampfsterilisation gegenüber der chemischen Sterilisation, beispielsweise mit Ethylenoxid, oder der Sterilisation durch Strahlung, insbesondere durch Gamma-Strahlung, der Vorzug zu geben.

Die Dampfsterilisation erfolgt normalerweise durch etwa 1/2-stündiges Behandeln der Membran bzw. der Membrananlage mit Heißdampf von > 110 °C. Das Kriterium der Dampfsterilisierbarkeit schränkt deshalb die Zahl potentieller Membranmaterialien stark ein. So lassen sich beispielsweise Membranen aus Polyacrylnitril grundsätzlich nicht dampfsterilisieren, weil die Überschreitung der Glastemperatur des Polymeren zu einer irreversiblen Schädigung des Materials bzw. der Membran führt. Auch hydrolyseempfindliche Polymere, beispielsweise einige Polycarbonate und Polyamide, überstehen eine Heißdampfsterilisation nicht unbeschadet.

Bekannt sind dampfsterilisierbare Membranen aus z.B. Polyetherimiden, Polysulfonen oder Polyvinylidenfluorid. Ein großer Nachteil dieser Membranen liegt in der Hydrophobie des Membranmaterials, die eine spontane Benetzung mit wäßrigen Medien ausschließt. Infolgedessen muß entweder verhindert werden, daß die Membran vollständig austrocknet oder die Membran muß vor einer Trocknung mit einem Hydrophilierungsmittel, wie beispielsweise Glyzerin, behandelt werden.

Hydrophile Membranen zeichnen sich dadurch aus, daß sie mit Wasser benetzbar sind. Ein Maß für die Benetzbarkeit ist der Randwinkel, den ein Wassertropfen zur Membranoberfläche bildet. Bei hydrophilen Materialien ist dieser Randwinkel stets < 90 Grad. Phänomenologisch läßt sich die Benetzung einer Dialysemembran auch daran erkennen, daß ein auf die Membranoberfläche gebrachter Wassertropfen nach kurzer Zeit in die Membran eindringt.

Ein weiterer schwerwiegender Nachteil hydrophober Materialien besteht darin, daß sie oft ein starkes, unspezifisches Adsorptionsvermögen besitzen. Beim Einsatz hydrophober Membranen findet deshalb häufig eine schnelle, fest anhaftende Belegung der Membranoberfläche mit vorzugsweise höhermolekularen Lösungsbestandteilen statt. Dieses als Fouling bekannte Phänomen führt zu einer raschen Verschlechterung der Membranpermeabilität. Durch eine nachträgliche Behandlung der Membran mit einem Hydrophilierungsmittel kann das Fouling nicht nachhaltig verhindert werden.

Es sind bereits Vorschläge für hydrophile Membranen bekannt geworden, die die genannten Nachteile nicht besitzen sollen. So wird in der DE-OS 3 149 976 vorgeschlagen, zur Herstellung einer hydrophilen Membran ein Polymerisatgemisch zu verwenden, das neben Polysulfon oder Polyamid wenigstens 15 Gewichtsprozent Polyvinylpyrrolidon enthält. Zur Hydrophilierung von z.B. Polyimid- und Polyethersulfonmembranen wird im EP 0 228 072 die Verwendung von Polyethylenglykol in Mengen von 44 bis 70 Gewichtsprozent, bezogen auf die Polymerlösung, beansprucht.

Die Hydrophilierung von Membranen durch Einsatz großer Mengen wasserlöslicher Polymere hat aber den Nachteil, daß die Hydrophilie der Membran bei deren Einsatz in wässrigen Medien stetig abnimmt, da das wasserlösliche Polymer herausgewaschen wird. Dies kann dazu führen, daß das Membranmaterial seine ursprüngliche Hydrophobie wiedergewinnt und die damit verbundenen, zuvor genannten, negativen Begleiterscheinungen zeigt.

Im EP 0 261 734 wird die Hydrophilisierung von Polyetherimidmembranen mittels Polyvinylpyrrolidon beschrieben. Zur Verhinderung von Auswascheffekten wird dabei das Polyvinylpyrrolidon im nichtgequollenen Zustand vernetzt. Das Verfahren zur Membranherstellung ist sehr aufwendig und damit kostenintensiv, da vor der Vernetzung nach der Fällung zunächst Lösungs- und Fällmittel aus der Membran entfernt werden müssen, nicht aber Polyvinylpyrrolidon. Erst daran anschließend erfolgt die Vernetzung des Polyvinylpyrrolidons durch Anwendung hoher Temperaturen, Strahlung oder chemisch mittels Isocyanaten, deren Reste vor der Verwendung der Membran im Lebensmittel- oder medizinischen Bereich unbedingt vollständig entfernt werden müssen.

Vermeiden lassen sich die beschriebenen Nachteile durch die Verwendung von hydrophilen, jedoch wasserunlöslichen Polymeren für die Membranherstellung. So wird in einer Reihe von Patenten, z.B. EP-0 182 506, US-3,855,122, die Herstellung von Membranen aus sulfonierten Polymeren beansprucht. Die dort beschriebenen Verfahren sind jedoch nur für die Herstellung von Flachmembranen geeignet. Sie besitzen ein hohes Salzrückhaltevermögen und kommen vornehmlich für den Einsatz bei der Umkehrosmose infrage.

Ein anderer Weg zu hydrophilen Membranen wird im amerikanischen Patent US-4,207,182 sowie in zwei japanischen Offenlegungsschriften (JP-OS 61-249 504 und JP-OS 62-49 912) eingeschlagen. Danach lassen sich hydrophile

Membranen für die Ultrafiltration wäßriger Lösungen vorteilhaft aus Gemischen von sulfoniertem und nichtsulfoniertem Polysulfon herstellen.

Wesentliches Ziel der im US-Patent 4,207,182 beschriebenen Erfindung ist dabei die Verwendung hochkonzentrierter Polymerlösungen zur Herstellung von Membranen, die sich dennoch durch eine hohe hydraulische Permeabilität auszeichnen. Erreicht wird dies durch die Verwendung von Polymergemischen, wobei der Anteil an sulfoniertem Polysulfon, bezogen auf die gesamte Polymermischung aus nichtsulfoniertem und sulfoniertem Polysulfon, zwischen 10 und 30 Gewichtsprozent beträgt.

Eine hohe hydraulische Permeabilität ist jedoch keinesfalls für alle Anwendungen von Vorteil. So führt eine hohe hydraulische Permeabilität bei der Dialyse zu einer Rückfiltration und damit zu einer Kontamination der zu dialysierenden Flüssigkeit mit unerwünschten Stoffen aus dem Dialysat.

Wie aus den Beispielen des USA-Patentes 4,207,182 hervorgeht, zeichnen sich die erfindungsgemäßen Membranen auch durch hohe Siebkoeffizienten für Dextran mit einem Molekulargewicht von 110.000 Dalton aus.

Aufgrund der hohen hydraulischen Permeabilität und der damit einhergehenden hohen Durchlässigkeit für makromolekulare Substanzen mit einem Molekulargewicht > 100.000 Dalton eignen sich die aus den beanspruchten Polymergemischen resultierenden Membranen nicht für die Hemodialyse. Dies gilt umso mehr, wenn man berücksichtigt, daß die dialytische Permeabilität der gemäß US-4,207,182 hergestellten Membranen vergleichsweise gering ist. Erstes Ziel der vorliegenden Erfindung war deshalb, eine synthetische, dampfsterilisierbare Membran zur Verfügung zu stellen, die permanent hydrophil ist und aufgrund ihrer Trenneigenschaften vorzugsweise, aber nicht ausschließlich, für den Einsatz bei der Dialyse geeignet ist.

Ein weiteres Ziel der vorliegenden Erfindung besteht darin, Membranen zur Verfügung zu stellen, die sich durch eine sehr gute Blutverträglichkeit, d.h. niedrige Thrombogenität und geringe Aktivierung des Komplementsystems, auszeichnen und die deshalb für den Einsatz bei der Blutreinigung besonders geeignet sind.

Die Beurteilung der Blutverträglichkeit (Biokompatibilität) erfolgt nach drei-stündigem Kontakt des Materials mit Humanblut. Als Kriterien für die Biokompatibilität werden die im Blut vorhandene Plättchenzahl (Platelet-Count), die Bildung des Thrombin-Antithrombin-Komplexes (TAT) sowie die bei der Aktivierung des Komplementsystems auftretende Substanz C5a herangezogen. Der Nachweis von TAT und C5a erfolgt mit handelsüblichen Assays nach Angaben des Herstellers, die Anzahl der im Blut vorhandenen Plättchen wird mit einem handelsüblichen Plättchenzählgerät bestimmt. Besonders blutverträglich ist ein Material, wenn die Plättchenzahl wenig vom Ausgangswert (= 100 %) abweicht und wenn die Bildung von TAT und C5a gering ist.

Daneben war es Ziel der vorliegenden Erfindung, ein Verfahren anzugeben, das die Herstellung von Membranen mit den genannten Eigenschaften ermöglicht.

Zur Erlangung dieser Ziele wurden umfangreiche Untersuchungen auf der Basis von Polymermischungen aus Polysulfon und sulfoniertem Polysulfon durchgeführt. Dabei zeigte sich überraschenderweise, daß Polymergemische mit mehr als 60 Gewichtsprozent sulfoniertem Polysulfon, bezogen auf den Gesamtpolysulfongehalt, besonders blutverträglich sind.

Die Aufgabe der Erfindung war es, eine synthetische, dampfsterilisierbare und biokompatible Membran zur Dialyse und/oder Ultrafiltration zur Verfügung zu stellen. Dabei war es bevorzugte Aufgabe, eine derartige Dialysemembran mit einem relativ hohen Siebkoeffizienten für Substanzen mit einem Molekulargewicht bis ca. 20.000 Dalton und einem möglichst niedrigen Siebkoeffizienten für Substanzen mit einem Molekulargewicht von mehr als ca. 50.000 Dalton auszubilden.

Gelöst wird diese Aufgabe durch eine Membran gemäß Oberbegriff, die dadurch gekennzeichnet ist, daß das Gemisch 65 bis 95 Gew.-% sulfoniertes Polysulfon, gegebenenfalls als Salz der Sulfonsäure, und 35 bis 5 Gew.-% unsulfoniertes Polysulfon enthält.

Zur Herstellung der erfindungsgemäßen Membranen wird eine Polymerlösung verwendet, die eine Mischung von Polysulfon und sulfoniertem Polysulfon enthält. Das Mischen der Polymeren kann dabei bereits in fester Form als Pulver- oder Granulatmischung und anschließendes gemeinsames Auflösen erfolgen oder durch Mischen der zuvor separat gelösten Polymeren. Die Polymerlösung kann bei der Verarbeitungstemperatur klar oder getrübt sein.

Vorzugsweise werden dem Gemisch aus Polysulfon und sulfoniertem Polysulfon vor der Membranbildung bis zu 12 Gew.-% wasserlösliche Polymere, bezogen auf das Gesamtgemisch, zugesetzt.

Dieser Zusatz dient der Verbesserung der Verarbeitbarkeit der Lösung und trägt zur Hydrophilisierung angesichts des hohen Anteiles an sulfoniertem Polysulfon nichts bei.

Die Polysulfone sind im wesentlichen Polyethersulfone, vorzugsweise solche Polyethersulfone, die als Strukturelement eine Gruppe der Formel

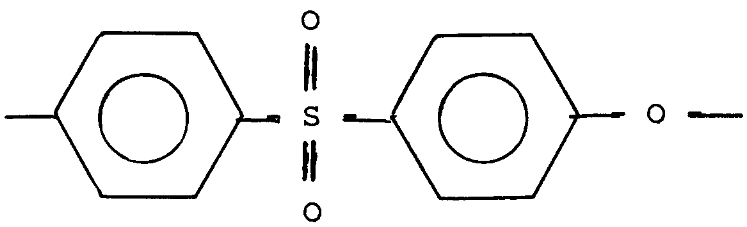

enthalten.

In einer Ausfüherungsform der Erfindung sind die sulfonierten Sulfone im wesentlichen sulfonierte Polyethersulfone, vorzugsweise solche sulfonierten Polyethersulfone, die als Strukturelement eine Gruppe der Formel

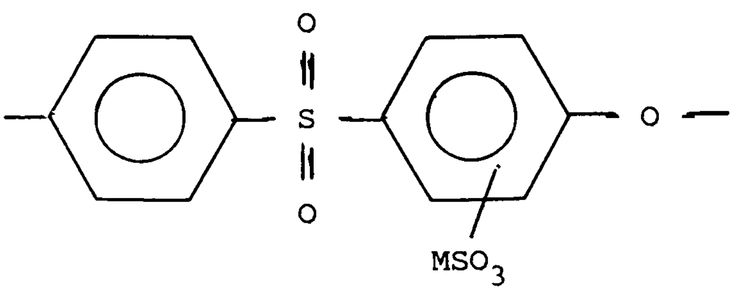

wobei M = H, Li, Na, K, $NH_4$, ½ Mg, ½ Ca ist, enthalten.

Der Sulfonierungsgrad des sulfonierten Polysulfons beträgt zwischen 3 Mol.-% und 30 Mol.-%, vorzugsweise zwischen 5 und 25 Mol-%.

Der Sulfonierungsgrad ist dabei das Verhältnis der sulfonierten Struktureinheiten zu allen Struktureinheiten beim sulfonierten Polysulfon und kann in Mol.-% oder als Molenbruch ausgedrückt werden.

In Ausgestaltung der Erfindung ist die synthetische hydrophile Dialysemembran dadurch gekennzeichnet, daß die Membran im wesentlichen eine feinporige, aus kugelförmigen Aggregaten oder als poröses Netzwerk aufgebaute Struktur besitzt, die keine Kavernen aufweist.

Unter dem Begriff Kavernen faßt man Hohlräume in der Membranstruktur zusammen, die im Vergleich zum normalen Porendurchmesser sehr groß sind. Durch geeignete Wahl der Fällbedingungen läßt sich die Bildung von Kavernen verhindern, die die mechanische Stabilität der Membran verschlechtern.

Gegenstand der Erfindung ist auch ein Verfahren zur Herstellung einer Membran, das dadurch gekennzeichnet ist, daß ein Gemisch von 35 bis 5 Gew.-% Polysulfon und 65 bis 95 Gew.-% sulfoniertem Polysulfon, gegebenenfalls als Sulfonsäuresalz, in DMF und/oder DMAc und/oder DMSO und/oder NMP, gegebenenfalls mit bis zu 12 Gew.-% wasserlöslichen Polymeren gelöst, verformt und als Membran mittels eines Fällmittels ausgefällt wird.

Als Fällmittel kommen dabei infrage: Nichtlösungsmittel gegebenenfalls im Gemisch mit anderen Nichtlösungsmittel und/oder einem oder mehreren Lösungsmitteln in einem solchen Anteil, daß reines Polymergemisch sich darin nicht in nennenswertem Ausmaß löst.

Vorzugsweise wird die Lösung in einer Hohlfadendüse verformt und der Hohlraum des Hohlfadens mittels eines Gemisches aus dem Lösungsmittel mit einem oder mehreren Nichtlösungsmitteln oder mittels nichtreagierender Gase oder mittels Aerosolen gebildet.

In Ausgestaltung des erfindungsgemäßen Verfahrens sind das Fällmittel für die Fällung der Membran an der Außenseite und das Fällmittel für die Ausbildung des Innenhohlraums unterschiedlich zusammengesetzt.

Die Temperatur der Spinnlösung oder des Fällungsmittels beträgt vorzugsweise höchstens 60°C, vorzugsweise höchstens 40°C.

Zur Bestimmung der Membraneigenschaften werden die nachfolgend beschriebenen Meßmethoden angewendet.

Die erfindungsgemäßen Membranen zeichnen sich durch einen relativ hohen Siebkoeffizienten für Substanzen mit einem mittleren Molekulargewicht bis ca. 20.000 Dalton und einen geringen Siebkoeffizienten, mindestens von weniger als 0,1 für Substanzen mit einem mittleren Molekulargewicht von mehr als ca. 50.000 Dalton aus. Der Siebkoeffizient (SK) einer Substanz gibt dabei an, in welchem Maße die Substanz durch die Membran hindurchtritt. Berechnet wird der Siebkoeffizient als Quotient der Konzentrationen der Testsubstanz im Filtrat (CF) und im Konzentrat (CK):

$$SK = CF / CK \qquad \langle 1 \rangle$$

Als Testsubstanzen für die erfindungsgemäßen Membranen eignen sich vor allem Cytochrom C mit einem Molekulargewicht von ca. 13.000 Dalton und Rinderserumalbumin (BSA) mit einem Molekulargewicht von ca. 68.000 Dalton.

Zur Bestimmung der Siebkoeffizienten von Cytochrom C und Albumin wird eine wässrige, phosphatgepufferte Kochsalzlösung (0,85 Gew% NaCl) verwendet, die neben 0,01 Gew% Cytochrom C und 5,0 Gew% BSA noch 0,003 Gew% Natriumdithionit enthält. Die genannten Konzentrationen an Cytochrom C und Albumin gehen bei der Berechnung der Siebkoeffizienten als CK in die Formel ⟨1⟩ ein. Die Werte für CF werden in einem normalen Ultrafiltrationsexperiment (37 °C, 0,2 bar) unter Verwendung der beschriebenen Lösung aus dem Filtrat bestimmt. Bei der Siebkoeffizientenmessung an Hohlfäden werden 200 ml Testlösung pro Minute und pro $m^2$ Membranfläche unter den angegebenen Bedingungen in den Hohlfaden hineingepumpt.

Eine andere Methode zur Untersuchung der Siebkoeffizienten einer Membran basiert auf der Verwendung einer wässrigen Mischung mehrerer Dextrane mit unterschiedlichen Molekulargewichten. Die Testlösung besitzt in diesem Fall eine sehr breite Molekulargewichtsverteilung, was in einigen Fällen Vorteile gegenüber der Testung mit Einzelsubstanzen hat. Die im Beispiel 1 verwandte Dextranlösung setzte sich zusammen aus:

| Substanz | Menge |
|---|---|
| Dextran 4.000 - 6.000 | 3,85 g |
| Dextran 9.400 | 3,85 g |
| Dextran 18.400 | 4,21 g |
| Dextran 40.000 | 8,09 g |
| Wasser | 1.980,00 g |

Die bei den Dextranen angegebenen Zahlenwerte kennzeichnen nach Angaben des Herstellers das mittlere Molekulargewicht des betreffenden Materials. Nach der Durchführung des Ultrafiltrationsexperimentes werden zeitgleich genommene Proben des Konzentrats und Retentats mittels Gelpermeationschromatographie (GPC) untersucht. Die zur Berechnung des Siebkoeffizienten erforderlichen Konzentrationen werden dem Chromatogramm in Form der Peakhöhen bei dem Elutionsvolumen, das dem gewünschten Molekulargewicht entspricht, entnommen. Kalibriert wird die GPC mit den aufgeführten Einzelsubstanzen.

Die dialytische Permeabilität DL beschreibt den Durchgang einer Substanz durch die Membran unter der treibenden Kraft eines Konzentrationsgefälles. Zur Messung der dialytischen Permeabilität wird die Membran auf einer Seite mit einer wässrigen Lösung der Testsubstanz und auf der anderen Seite mit reinem Wasser in Kontakt gebracht. Aus dem Lösungsvolumen V, der Membranfläche A, der Kontaktzeit t sowie der Konzentrationen der Testsubstanz vor (C0) und nach (Ct) der Dialyse berechnet sich die DL nach folgender Formel:

$$DL = [V / (A * t)] * \ln (C0 / Ct) \qquad \langle 2 \rangle$$

Die Dialyse wird bei 37 °C mit einer Lösung von 10 mmol Kreatinin und 0,074 mmol Vitamin B12 in 1000 ml Wasser durchgeführt. Die Konzentrationen der Testsubstanzen lassen sich auf photometrischem Wege leicht ermitteln. Vor der Bestimmung der dialytischen Permeabilität ist das gesamte Porenvolumen der zu testenden Membran mit Flüssigkeit zu füllen. Zweckmäßigerweise führt man deshalb vor der Dialyse eine UFR-Messung an der betreffenden Membran durch und stellt dann sicher, daß die Membran bis zur Dialyse nicht trocknet.

Zur Charakterisierung der hydraulischen Permeabilität einer Membran wird deren Ultrafiltrationsrate (UFR) gemessen, die angibt, welche Menge Wasser pro Zeiteinheit und Membranfläche unter einem gewissen Druck durch die Membran permeiert.

Die Membranfläche ist definiert als die äußere Oberfläche einer Membran, die mit der Testlösung in Kontakt steht. Insbesondere die die Poren in der Membran abgrenzenden Wände werden als innere Oberfläche nicht zur Membranfläche hinzugerechnet. Bei Hohlfäden, die von innen (durch das Lumen) angeströmt werden, ergibt sich die Membranfläche als Produkt der Länge und des Umfangs des mit der Testlösung in Kontakt stehenden Lumens.

In den Beispielen der vorliegenden Erfindung wird die UFR in der Dimension

$$[ml/(m^2 \times h \times 133{,}3\ Pa)]\ ([ml/(m^2 \cdot h \cdot mmHg)])$$

angegeben.

Die Figuren 1 bis 3 zeigen Rasterelektronen-Mikroskop-Aufnahmen von erfindungsgemäßen Membranen.

Im einzelnen zeigt Fig. 1 eine Bruchfläche mit der Innenwald bei einer Vergrößerung von 10.000 : 1. Figur 2 zeigt die Bruchfläche in der Wandmitte bei einer Vergrößerung von 50.000 : 1.

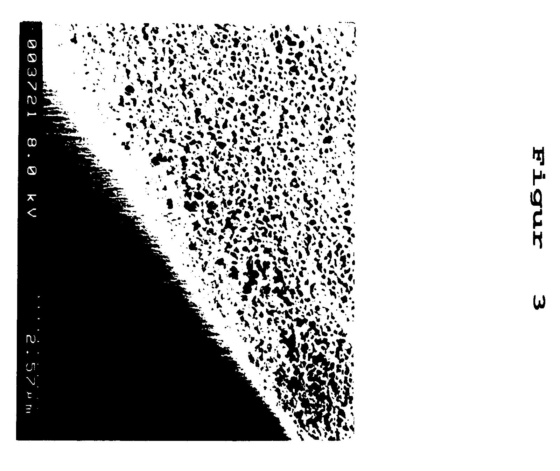

Figur 3 zeigt wiederum eine Bruchfläche mit Innenwand bei einer Vergrößerung von 10.500 : 1.

Die Erfindung wird anhand der nachfolgenden Beispiele näher erläutert.

Soweit nicht anders angegeben, wird als nichtsulfonierte Komponente ein Polyethersulfon (PES = Victrex®, Type 5200 der Fa. ICI) verwendet; als sulfoniertes Material kommt das aus dem genannten Polyethersulfon durch Sulfonierung gemäß DE-OS 3 814 760 erhaltene sulfonierte Polyethersulfon (SPES) zum Einsatz.

**Beispiel 1:**

In einem temperierbaren Rundkolben mit Rührer wird eine Pulvermischung von 72 g PES und 168 g SPES in 740 g Dimethylsulfoxid (DMSO), dem 30 g Glyzerin zugefügt wurden, bei 70 Grad Celsius unter intensivem Rühren gelöst. Als SPES wird ein Material mit einem Substitutionsgrad von DS = 7,5 %, das in Form der Säure ($SO_3H^-$) vorliegt, eingesetzt. Die Polymerlösung wird durch Anlegen eines Unterdruckes bei 40 Grad Celsius entgast. Die Viskosität der Lösung beträgt danach bei einer Schergeschwindigkeit von D = 10 $s^{-1}$ und 20 Grad Celsius 12,1 Pa s. Zur Herstellung von Hohlfäden wird die Polymerlösung durch den Ringspalt einer auf 40 Grad Celsius erwärmten Düse extrudiert, durch deren Innenraum gleichzeitig eine Mischung von 50 Gew% Glyzerin, 10 Gew% Wasser und 40 Gew% DMSO gepumpt wird. Die Düse taucht in eine Fällbad-Flüssigkeit ein, die aus 70 Gew% DMSO und 30 Gew% Wasser besteht und deren Temperatur 40 Grad Celsius beträgt. Der Hohlfaden wird nach der Düse mit einer Geschwindigkeit von 20 m/min abgezogen und durch ein Fällbad mit einer Fadenlauflänge von 180 cm geleitet. Daran anschließend durchläuft der Hohlfaden eine mit Wasser gefüllte 10 m lange Wanne (Temperatur = 20 Grad Celsius). Der so erhaltene Hohlfaden wird zur Entfernung von Lösungsmittelresten intensiv gewaschen, 1 Minute mit einer Mischung von 20 Gew% Glycerin in Wasser bei 20 Grad Celsius nachbehandelt und abschließend bei Raumtemperatur getrocknet. Es sei darauf hingewiesen, daß die Nachbehandlung ausschließlich der Verbesserung der Handhabbarkeit bei der folgenden Testbündelherstellung dient und nicht etwa einer Hydrophilierung. Auch ohne Glycerinbehandlung ist das Material benetzbar. Der Hohlfaden besitzt einen inneren Durchmesser von ca. 230 µm und eine Wandstärke von 36 µm. Bei 37 Grad Celsius beträgt die hydraulische Permeabilität (UFR) für Wasser = 69 [ml/($m^2$ x h x 133,3 Pa)] ([ml/($m^2$ · h · mmHg)]). Der mit einer Dextranmischung bestimmte Siebkoeffizient für ein Molekulargewicht von ca. 18.400 Dalton beträgt 0,65.

Rasterelektronenmikroskopische (REM-) Aufnahmen des Hohlfadens sind in Abb. 1 dargestellt.

**Beispiel 2:**

In einem Rührgefäß werden bei Raumtemperatur 50 g Polyvinylpyrrolidon (PVP K30 der Fa. BASF) in 710 g DMSO aufgelöst. Nach dem Erwärmen der Lösung auf 70 Grad Celsius erfolgt unter Rühren die portionsweise Zugabe und Auflösung einer Pulvermischung von 168 g SPES (DS = 7,5 %) und 72 g PES (Verhältnis PES:SPES = 30:70). Die Lösung besitzt eine Viskosität von 7,9 Pa s (D = 5 $s^{-1}$, T = 40 °C). Wie im Beispiel 1 beschrieben, werden nach dem Entgasen aus der Polymerlösung Hohlfäden hergestellt. Die so erhaltene Membran besitzt folgende Eigenschaften:

| | |
|---|---|
| mittlere Wanddicke | = 33 µm |
| UFR (Wasser, 37 °C) | = 27 [ml/($m^2$ x h x 133,3 Pa)] ([ml/($m^2$ · h · mmHg)]) |
| SK (Cytochrom C) | = 0,58 |
| SK (Albumin) | = 0,00 |
| DL (Vitamin B12) | = 11,8 $10^{-3}$ cm/min |
| DL (Kreatinin) | = 71,4 $10^{-3}$ cm/min |

Den REM-Aufnahmen dieser Membran (Abb. 2) ist deutlich eine kugelförmige Struktur zu entnehmen.

**Beispiel 3:** (Vergleichsbeispiel)

In Abänderung des Beispiels 2 wird eine Polymerlösung verwendet, die neben 5 Gew% PVP K30 und 71 Gew% DMSO nur noch nichtsulfoniertes PES (24 Gew%) enthält. Die daraus resultierende Membran hat folgende Eigenschaften:

| | |
|---|---|
| mittlere Wanddicke | = 43 µm |
| UFR (Wasser, 37 °C) | = 28 [ml/(m$^2$ x h x 133,3 Pa)] ([ml/(m$^2$ · h · mmHg)]) |
| SK (Cytochrom C) | = 0,26 |
| SK (Albumin) | = 0,00 |
| DL (Vitamin B12) | = 1,3 $10^{-3}$ cm/min |
| DL (Kreatinin) | = 4,7 $10^{-3}$ cm/min Der |

Der Siebkoeffizient für Cytochrom C und die dialytische Permeabilität ist im Vergleich zum Beispiel 2 sehr viel schlechter. Dies gilt auch, wenn man die unterschiedliche Wanddicke berücksichtigt.

**Beispiel 4:** (Vergleichsbeispiel)

In Abänderung des Beispiels 2 wird eine Polymerlösung verwendet, die 16,8 Gew% PES, 7,2 Gew% SPES (DS = 7,5 %), 5 Gew% PVP K30 und 71 Gew% DMSO enthält. Die daraus resultierende Membran mit einem PES:SPES-Verhältnis von 70:30 hat folgende Eigenschaften:

| | |
|---|---|
| mittlere Wanddicke | = 42 µm |
| UFR (Wasser, 37 °C) | = 34 [ml/(m$^2$ x h x 133,3 Pa)] ([ml/(m$^2$ · h · mmHg)]) |
| SK (Cytochrom C) | = 0,41 |
| SK (Albumin) | = 0,00 |
| DL (Vitamin B12) | = 7,8 $10^{-3}$ cm/min |
| DL (Kreatinin) | = 38,3 $10^{-3}$ cm/min |

Auch in diesem Fall sind die Trenneigenschaften deutlich schlechter als im Beispiel 2.

**Beispiel 5:**

Eine Membran wird, wie im Beispiel 2 beschrieben, aus einer Polymerlösung aus 6,0 Gew% PES, 14,0 Gew% SPES, 5 Gew% PVP K30 und 75 Gew% DMSO unter Verwendung einer Innenfüllung aus 60 Gew% DMSO, 10 Gew% Wasser und 30 Gew% Glycerin hergestellt. Als Abzug nach der Düse wird eine Geschwindigkeit von 30 m/min gewählt. Nach einer 20-minütigen Heißdampfsterilisation bei 121 Grad Celsius hat die resultierende Membran folgende Eigenschaften:

| | |
|---|---|
| mittlere Wanddicke | = 38 µm |
| UFR (Wasser, 37 °C) | = 148 [ml/(m² x h x 133,3 Pa)] ([ml/(m² · h · mmHg)]) |
| SK (Cytochrom C) | = 0,8 |
| SK (Albumin) | = 0,09 |
| DL (Vitamin B12) | = 20,3 $10^{-3}$ cm/min |
| DL (Kreatinin) | = 103,3 $10^{-3}$ cm/min Die |

Die Heißdampf-Sterilisation führt zu keiner Verschlechterung der hydraulischen und dialytischen Membraneigenschaften. Die REM-Aufnahme der Membran (Abb. 3) zeigt eine netzartige Struktur.

**Beispiel 6:**

Eine Membran wird, wie im Beispiel 2 beschrieben, aus einer Polymerlösung aus 16,2 Gew.-% SPES (DS = 7,5 %), 1,8 Gew.-% PES (PES: SPES = 10 : 90), 10 Gew.-% PVP K30 und 72 Gew.-% DMSO unter Verwendung einer Innenfüllung aus 65 Gew.-% DMSO und 35 Gew.-% Wasser hergestellt. Folgende Eigenschaften wurden an dieser Membran gemessen:

| | |
|---|---|
| mittlere Wanddicke | = 33 µm |
| UFR (Wasser, 37°C) | = 28 [ml/(m² x h x 133,3 Pa)] ([ml/(m² · h · mmHg)]) |
| SK (Cytochrom C) | = 0,1 |
| SK (Albumin) | = 0,0 |
| DL (Vitamin B12) | = 8,5 $10^{-3}$ cm/min |
| DL (Kreatinin) | = 127,0 $10^{-3}$ cm/min |

Die Ergebnisse belegen, daß der PVP-Zusatz zur Polymerlösung tatsächlich nicht als "Porenbildner" wirkt und andererseits, daß die Lage der sich aus den Siebkoeffizienten ergebenden Trennkurve über das Mischungsverhältnis von PES : SPES in weiten Bereichen verschoben werden kann.

**Beispiel 7:**

Entsprechend Beispiel 1 wird eine Membran aus einer Polymerlösung, die 18,2 Gew.-% SPES (DS = 20,5%), 7,8 Gew.-% PES (PES : SPES = 30 : 70) und 74 Gew.-% DMSO enthält, hergestellt. Als Innenfüllung wird eine Mischung von 60 Gew.-% Wasser und 40 Gew.-% DMSO verwendet. Die resultierende Membran zeichnet sich durch eine hohe diffusive Permeabilität bei gleichzeitig niedriger Trenngrenze aus:

| | |
|---|---|
| mittlere Wanddicke | = 30 µm |
| UFR (Wasser, 37°C) | = 60 [ml/($m^2$ x h x 133,3 Pa)] ([ml/($m^2$ · h · mmHg)]) |
| SK (Cytochrom C) | = 0,0 |
| SK (Albumin) | = 0,0 |
| DL (Vitamin B12) | = 17,0 $10^{-3}$ cm/min |
| DL (Kreatinin) | > 150 $10^{-3}$ cm/min |

**Beispiel 8:**

Zur Herstellung von Flachmembranen wird eine zu Beispiel 1 analoge Polymerlösung, deren Konzentration an PES und SPES zusammen 20 Gew% beträgt, auf einer Glasplatte als 300 µm dicke Schicht ausgezogen. Die Fällung des Polymeren erfolgt durch Untertauchen der Glasplatte mitsamt des Polymerfilms in Wasser von 20 Grad Celsius. Nach dem selbständigen Ablösen der Membran von der Glasplatte wird die Membran zur Entfernung von Lösungsmittelresten intensiv unter fließendem Wasser gespült. Abschließend wird die Membran ohne weitere Nachbehandlung bei Raumtemperatur getrocknet. Für verschiedene PES:SPES-Mischungsverhältnisse im Bereich SPES ≦ 70 Gew% und DS(SPES) = 15 % wurden folgende Biokompatibilitätsparameter ermittelt:

Tabelle 1

| Gew.-Verhältnis PES : SPES | DS (SPES) [%] | Platelet-Count [%] | TAT [ng/ml] | C5a [ng/ml] |
|---|---|---|---|---|
| 95 : 5 | 15 | 79 | 75 | 99 |
| 70 : 30 | 15 | 74 | 90 | 25 |
| 30 : 70 | 15 | 87 | 38 | < 10 |
| Leerwert | -- | 88 | 24 | < 10 |

Die PES/SPES-Mischungen mit SPES-Anteilen innerhalb des beanspruchten Bereiches liefern für C5a und/oder TAT deutlich bessere Werte als die Mischungen außerhalb des beanspruchten Bereiches.

**Beispiel 9:**

Biokompatibilitätsuntersuchungen an Flachmembranen, die analog zu Beispiel 8 hergestellt wurden, ergaben für verschiedene Mischungsverhältnisse von PES:SPES und unterschiedliche Substitutionsgrade des SPES die folgenden Werte:

Tabelle 2

| Gew.-Verhältnis PES : SPES | DS (SPES) [%] | Platelet-Count [%] | TAT [ng/ml] | C5a [ng/ml] |
|---|---|---|---|---|
| 30 : 70 | 12 | 75 | 45 | < 10 |
| 20 : 80 | 12 | 78 | 53 | < 10 |
| 10 : 90 | 12 | 75 | 52 | < 10 |
| 20 : 80 | 16 | 77 | 36 | < 10 |
| 20 : 80 | 4 | 75 | 29 | < 10 |
| Leerwert | -- | 88 | 13 | < 10 |

Alle Materialien dieses Beispiels zeichnen sich durch eine hervorragende Blutverträglichkeit aus.

**Patentansprüche**

1. Synthetische hydrophile Membran in Form von Hohlfäden oder Flachmembranen zur Dialyse und/oder Ultrafiltration, enthaltend ein Gemisch von Polysulfon und sulfoniertem Polysulfon, dadurch gekennzeichnet, daß das Gemisch 65 bis 95 Gew.-% sulfoniertes Polysulfon, gegebenenfalls als Salz der Sulfonsäure, und 35 bis 5 Gew.-% unsulfoniertes Polysulfon enthält.

2. Synthetische hydrophile Dialysemembran nach Anspruch 1, dadurch gekennzeichnet, daß dem Gemisch aus Polysulfon und sulfoniertem Polysulfon vor der Membranbildung bis zu 12 Gew.-% wasserlösliche Polymere, bezogen auf das Gesamtgemisch, zugesetzt wurden.

3. Synthetische hydrophile Dialysemembran nach einem oder mehreren der Ansprüche 1 bis 2, dadurch gekennzeichnet, daß die Polysulfone im wesentlichen Polyethersulfone sind.

4. Synthetische hydrophile Dialysemembran nach Anspruch 3, dadurch gekennzeichnet, daß die Polyethersulfone als Strukturelement eine Gruppe der Formel

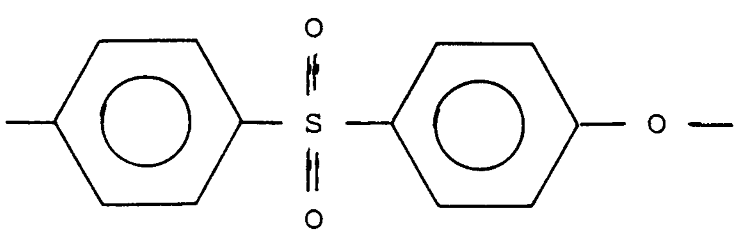

enthalten.

5. Synthetische hydrophile Dialysemembran nach einem oder mehreren der Ansprüche 1 bis 4, dadurch gekennzeichnet, daß die sulfonierten Sulfone im wesentlichen sulfonierte Polyethersulfone sind.

6. Synthetische hydrophile Dialysemembran nach Anspruch 5, dadurch gekennzeichnet, daß die sulfonierten Polyethersulfone als Strukturelement eine Gruppe der Formel

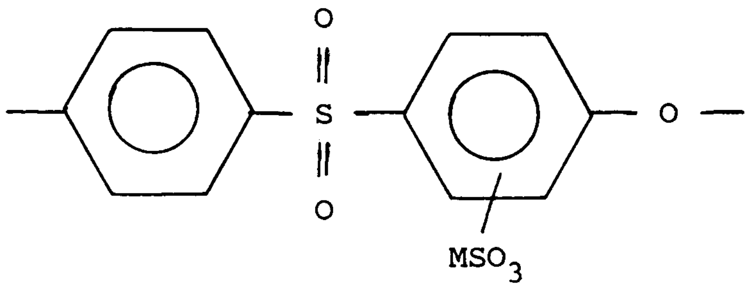

wobei M = H, Li, Na, K, $NH_4$, ½ Mg, ½ Ca ist, enthalten.

7. Synthetische hydrophile Membran nach einem oder mehreren der Ansprüche 1 bis 6, dadurch gekennzeichnet, daß der Sulfonierungsgrad des sulfonierten Polysulfons zwischen 3 Mol.-% und 30 Mol.-%, vorzugsweise zwischen 5 und 25 Mol.-% beträgt.

8. Synthetische hydrophile Membran nach einem der Ansprüche 1 bis 7, dadurch gekennzeichnet, daß die Membran im wesentlichen eine feinporige, aus kugelförmigen Aggregaten oder als poröses Netzwerk aufgebaute Struktur besitzt, die keine Kavernen aufweist.

9. Verfahren zur Herstellung einer Membran gemäß den Ansprüchen 1 bis 8, dadurch gekennzeichnet, daß ein Gemisch von 35 bis 5 Gew.-% Polysulfon und 65 bis 95 Gew.-% sulfoniertem Polysulfon, gegebenenfalls als Sulfonsäuresalz, in DMF und/oder DMAc und/oder DMSO und/oder NMP, gegebenenfalls mit bis zu 12 Gew.-% wasserlöslichen Polymeren gelöst, verformt und als Membran mittels eines oder mehrerer Fällmittel ausgefällt wird.

10. Verfahren nach Anspruch 9, dadurch gekennzeichnet, daß die Lösung in einer Hohlfadendüse verformt wird, wobei der Hohlraum des Hohlfadens mittels eines Gemisches aus dem Lösungsmittel mit einem oder mehreren Nichtlösungsmitteln oder mittels nichtreagierender Gase oder mittels Aerosolen gebildet wird.

11. Verfahren nach Anspruch 9 oder 10, dadurch gekennzeichnet, daß das Fällmittel für die Fällung der Membran an der Außenseite und das Fällmittelgemisch für die Ausbildung des Innenhohlraums unterschiedlich zusammengesetzt sind.

12. Verfahren nach einem oder mehreren der Ansprüche 9 bis 11, dadurch gekennzeichnet, daß die Temperatur der Spinnlösung oder des bzw. der Fällungsmittel höchstens 60°C, vorzugsweise höchstens 40°C, beträgt.

## Claims

1. Synthetic hydrophilic membrane in the form of hollow filaments or of flat membranes for dialysis and/or ultrafiltration, containing a mixture of polysulphone and sulphonated polysulphone, characterised in that the mixture contains from 65 to 95 wt.% of sulphonated polysulphone, optionally as salt of sulphonic acid, and from 35 to 5 wt.% of unsulphonated polysulphone.

2. Synthetic hydrophilic dialysis membrane according to claim 1, characterised in that up to 12 wt.% of water-soluble polymers, referred to the total mixture, have been added to the mixture of polysulphone and sulphonated polysulphone prior to the formation of the membrane.

3. Synthetic hydrophilic dialysis membrane according to one or both of claims 1 and 2, characterised in that the polysulphones are substantially polyether sulphones.

4. Synthetic hydrophilic dialysis membrane according to claim 3, characterised in that the polysulphones contain as structural element a group having the formula

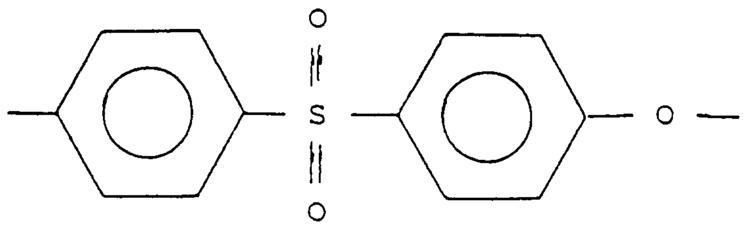

5. Synthetic hydrophilic dialysis membrane according to one or more of claims 1 to 4, characterised in that the sulphonated sulphones are substantially sulphonated polyether sulphones.

6. Synthetic hydrophilic dialysis membrane according to claim 5, characterised in that the sulphonated polyether sulphones contain as structural element a group having the formula

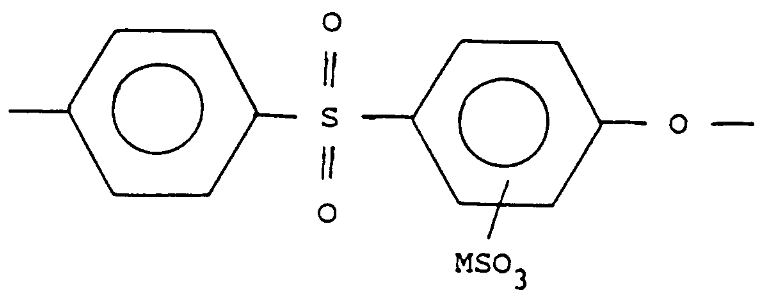

wherein M is H, Li, Na, K, $NH_4$, ½ Mg, ½ Ca.

7. Synthetic hydrophilic membrane according to one or more of claims 1 to 6, characterised in that the degree of sulphonation of the sulphonated polysulphone is between 3 mol-% and 30 mol-%, preferably between 5 and 25 mol-%.

8. Synthetic hydrophilic membrane according to one of claims 1 to 7, characterised in that the membrane possesses substantially a fine-pored structure built up from spherical aggregates or as a porous network, which structure contains no caverns.

9. Process for the production of a membrane according to claims 1 to 8, characterised in that a mixture of from 35 to 5 wt.% of polysulphone and from 65 to 95 wt.% of sulphonated polysulphone, optionally as salt of sulphonic acid, is dissolved in DMF and/or DMAc and/or DMSO and/or NMP, optionally together with up to 12 wt.% of water-soluble polymers, is shaped and precipitated as a membrane by means of one or more precipitating agents.

10. Process according to claim 9, characterised in that the solution is shaped in a hollow filament nozzle, with the cavity of the hollow filament being formed by means of a mixture of the solvent together with one or more non-solvents or by means of non-reactive gases or by means of aerosols.

11. Process according to claim 9 or 10, characterised in that the precipitating agent for the precipitation of the membrane on the outside and the mixture of precipitating agents for the formation of the internal cavity differ from one another in composition.

12. Process according to one or more of claims 9 to 11, characterised in that the temperature of the spinning solution or of the precipitating agent(s) is at most 60°C, preferably at most 40°C.

## Revendications

1. Membrane synthétique hydrophile sous forme de fibres creuses ou de membranes plates pour la dialyse et/ou l'ultrafiltration, contenant un mélange de polysulfone et de polysulfone sulfonée, caractérisée en ce que le mélange contient de 65 à 95 % en poids de polysulfone sulfonée, éventuellement sous forme de sel d'acide sulfonique et de 35 à 5 % en poids de polysulfone non sulfonée.

2. Membrane synthétique hydrophile pour dialyse conforme à la revendication 1, caractérisée en ce que l'on a ajouté au mélange de polysulfone et de polysulfone sulfonée, avant la formation de la membrane, jusqu'à 12 % en poids par rapport au mélange total, de polymères hydrosolubles.

3. Membrane synthétique hydrophile pour dialyse conforme à une ou plusieurs des revendications 1 ou 2, caractérisée en ce que les polysulfones sont essentiellement des poly(éther sulfone).

4. Membrane synthétique hydrophile pour dialyse conforme à la revendication 3, caractérisée en ce que les poly(éther sulfone) contiennent des motifs constitutifs de formule

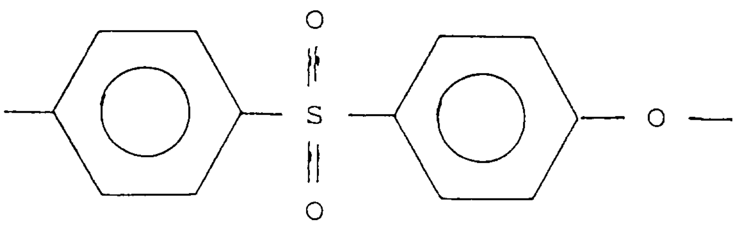

5. Membrane synthétique hydrophile pour dialyse conforme à une ou plusieurs des revendications 1 à 4, caractérisée en ce que les sulfones sulfonées sont essentiellement des poly(éther sulfone) sulfonées.

6. Membrane synthétique hydrophile pour dialyse conforme à la revendication 5, caractérisée en ce que les poly(éther sulfone) sulfonées contiennent des motifs constitutifs de formule

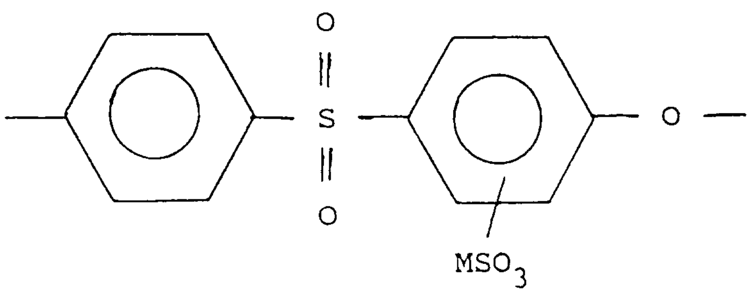

où M = H, Li, Na, K, $NH_4$, 1/2 Mg ou 1/2 Ca.

7. Membrane synthétique hydrophile conforme à une ou plusieurs des revendications 1 à 6, caractérisée en ce que le taux de sulfonation de la polysulfone sulfonée est compris entre 3 et 30 % en moles, de préférence entre 5 et 25 % en moles.

8. Membrane synthétique hydrophile conforme à une des revendications 1 à 7, caractérisée en ce que la membrane possède essentiellement une structure finement poreuse constituée d'agrégats sphériques ou d'un réseau de pores, et ne comporte pas de cavernes.

9. Procédé pour la préparation d'une membrane conforme aux revendications 1 à 8, caractérisé en ce que l'on dissout un mélange composé de 35 à 5 % en poids de polysulfone et de 65 à 95 % en poids de polysulfone sulfonée,

éventuellement sous forme de sel d'acide sulfonique, dans du DMF et/ou du DMac et/ou du DMSO et/ou du NMP, éventuellement avec jusqu'à 12 % en poids de polymères hydrosolubles, que l'on met en forme cette solution et que l'on fait précipiter la membrane au moyen d'un ou de plusieurs agents précipitants.

**10.** Procédé conforme à la revendication 9, caractérisé en ce que la solution est mise en forme au moyen d'une filière d'extrusion de fibres creuses, l'espace vide de la fibre creuse étant formé au moyen d'un mélange d'un solvant contenant un ou plusieurs non solvants ou au moyen de gaz inertes ou d'aérosols.

**11.** Procédé conforme à une des revendications 9 ou 10, caractérisé en ce que l'agent précipitant pour la formation de la paroi extérieure de la membrane et le mélange d'agents précipitants pour la formation de l'espace vide intérieur ont des compositions différentes.

**12.** Procédé conforme à une ou plusieurs des revendications 9 à 11, caractérisé en ce que la température de la solution à filer ou de l'agent ou des agents précipitant(s) est au plus égale à 60 °C, de préférence au plus égal à 40 °C.

Figur 1

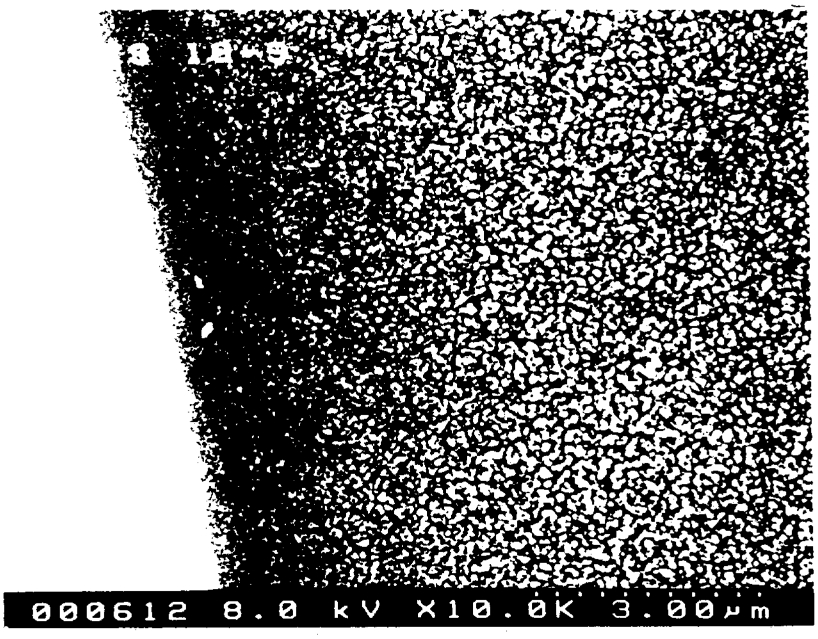

Figur 2

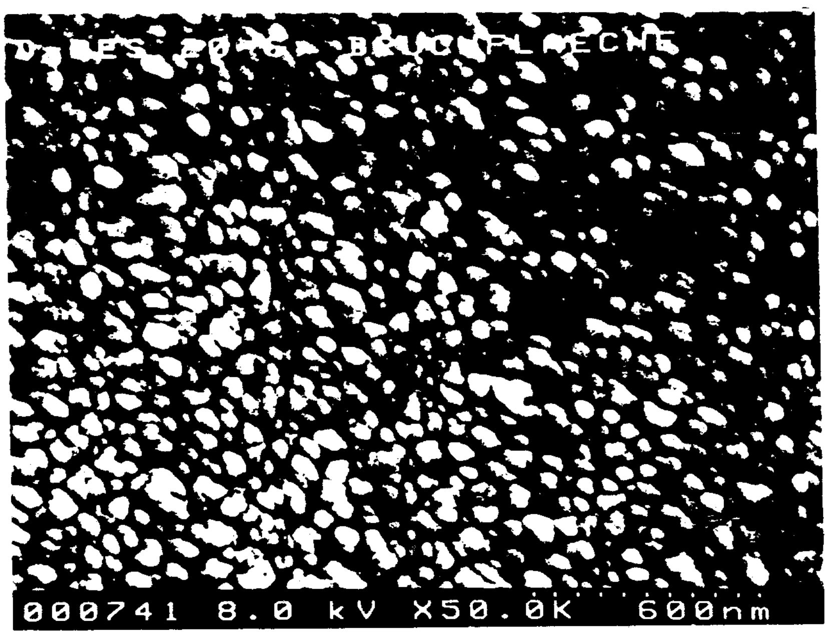

Figur 3